## Europäisches Patentamt
## European Patent Office
## Office européen des brevets

(19)

(11) Numéro de publication: **0 133 296**
A2

(12)
# DEMANDE DE BREVET EUROPEEN

(21) Numéro de dépôt: **84108861.0**

(22) Date de dépôt: **26.07.84**

(51) Int. Cl.⁴: **F 16 J 15/56**

(30) Priorité: **29.07.83 FR 8312552**

(43) Date de publication de la demande: **20.02.85**
**Bulletin 85/8**

(84) Etats contractants désignés: **BE DE FR GB IT**

(71) Demandeur: **COMPAGNIE PARISIENNE D'OUTILLAGE A AIR COMPRIME Société anonyme dite:, Zone Industrielle des Fourmis B.P. 37, F-74130 Bonneville (FR)**

(72) Inventeur: **Andrieu, Robert, Chateau des Tours Ayse, F-74130 Bonneville (FR)**
Inventeur: **Canu, Gérard, Le Pré de la Grange, F-74130 Bonneville (FR)**

(74) Mandataire: **Weinmiller, Jürgen et al, Zeppelinstrasse 63, D-8000 München 80 (DE)**

(54) **Dispositif de guidage d'étanchéité et de raclage de tige de vérin.**

(57) L'invention concerne un dispositif de guidage d'étanchéité et de raclage de tige (4) de vérin (3) comportant un logement (2) situé autour de la tige (4) du vérin (3) à l'intérieur duquel est diposé une couronne (1) en matière thermoplastique moulée dont au moins une partie de la surface interne (7) s'applique sur la tige (4) tandis qu'au moins une partie de la surface externe (8) s'applique sur la paroi (6) du logement (2) opposée à la tige (4), ladite couronne (1) comportant à une première extrémité (11) recevant la haute pression une lèvre intérieure (12) dirigée vers l'axe de la tige (4) et venant frotter sur cette tige (4) et à l'autre extrémité (14) recevant la basse pression une lèvre intérieure (15) dirigée vers l'axe de la tige (4) et venant racler la surface de ladite tige (4), ladite couronne (1) comportant des moyens d'étanchéité dans le logement (2) et étant bloquée dans ledit logement (2) par des moyens de blocage. Selon l'invention la paroi (6) du logement (2) opposée à la tige (4) est un cylindre droit et les moyens d'étanchéité sont constitués par une lèvre extérieure (13) s'écartant de l'axe de la tige et disposée à l'extrémité (11) recevant la haute pression. Cette lèvre (13) vient appliquer sur la paroi (6) du logement (2) opposée à la tige (4). Les moyens de blocage sont constitués par un jonc (16) prenant appui sur l'extrémité (14) de la couronne (1) soumise à la basse pression et dans une nervure (17) ménagée dans la paroi (6) du logement (2) opposée à la tige (4).

Le dispositif assure les trois fonctions raclage, guidage et étanchéité et peut être très facilement fabriqué par moulage.

## Dispositif de guidage d'étanchéité et de raclage de tige de vérin

La présente invention a trait à un dispositif de guidage d'étanchéité et de raclage de tige de vérin comportant un logement situé autour de la tige du vérin à l'intérieur duquel est disposé une couronne en matière thermoplastique moulée dont au moins une partie de la surface interne s'applique sur la tige tandis qu'au moins une partie de la surface externe s'applique sur la paroi du logement opposée à la tige, ladite couronne comportant à une première extrémité recevant la haute pression une lèvre intérieure dirigée vers l'axe de la tige et venant frotter sur cette tige et à l'autre extrémité recevant la basse pression une lèvre intérieure dirigée vers l'axe de la tige et venant racler la surface de ladite tige, ladite couronne comportant des moyens d'étanchéité dans le logement et étant bloquée dans ledit logement par des moyens de blocage.

Un tel dispositif est décrit dans le document EU-A-50049.

Dans le dispositif connu la couronne comporte une partie périphérique en relief qui par écrasement parallèlement à l'axe du vérin dans une machoire permet de maintenir ladite couronne en position.

Or un tel écrasement a pour effet de déformer la couronne ce qui conduit à un mauvais guidage de la tige du vérin et même à son coincement.

Le dispositif selon l'invention permettant un très bon guidage de la tige est caractérisé en ce que la paroi du logement opposée à la tige est un cylindre droit, en ce que les moyens d'étanchéité sont constitués par une lèvre extérieure s'écartant de l'axe de la tige et disposée à l'extrémité recevant la haute pression, ladite lèvre venant appliquer sur la paroi du logement opposée à la tige et en ce que les moyens de blocage sont constitués par un jonc prenant appui sur l'extrémité de la couronne soumise à la basse pression et dans une nervure ménagée dans la paroi du logement opposée à la tige.

Le dispositif selon l'invention présente également une très bonne étanchéité réalisée par le contact entre une lèvre extérieure et la paroi du logement opposée à la tige.

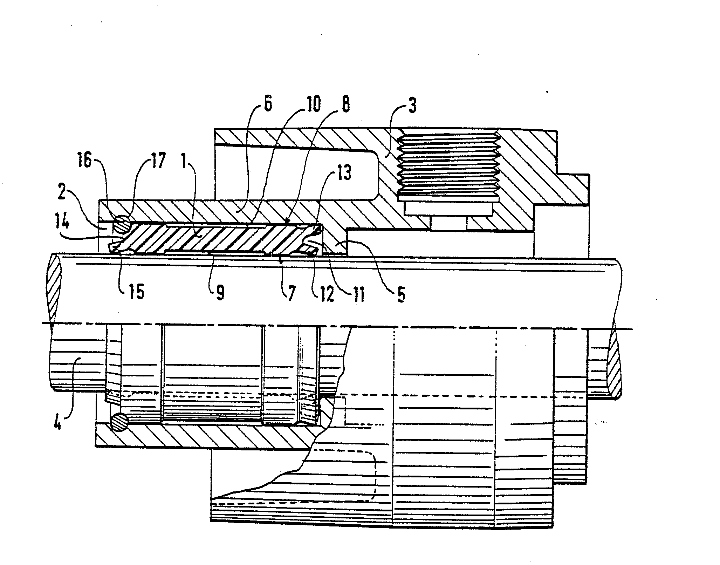

L'invention va maintenant être décrite plus en détail en se référant à un mode de réalisation particulier cité à titre d'exemple non limitatif et représenté sur la figure unique annexe qui représente le dispositif selon l'invention moitié en coupe, moitié en perspective.

Le dipositif comporte une couronne 1 en matière thermoplastique qui est disposée dans un logement 2 du fond d'un vérin 3 entourant une tige 4 du vérin.

Le logement 2 est ouvert à l'avant et comporte un fond 5 à l'arrière muni d'une ouverture centrale à travers laquelle passe la tige 4.

Le logement 2 est circulaire et comporte une paroi longitudinale 6 parallèle à l'axe du vérin.

La couronne 1 comporte une surface interne 7 et une surface externe 8. La surface interne 7 comporte dans sa partie médiane une découpe 9 et s'applique à l'avant et à l'arrière contre la tige 4.

La surface externe 8 comporte dans sa partie médiane une découpe 10 et s'applique à l'avant et à l'arrière contre la paroi 6.

L'extrémité arrière 11 de la couronne 1 sur laquelle est appliquée la haute pression comporte une lèvre intérieure 12 dirigée vers l'axe et qui frotte sur la tige 4, et une lèvre extérieure 13 s'écartant de l'axe et qui vient s'appliquer sur la paroi 6.

L'extrémité avant 14 de la couronne 1 sur laquelle est appliquée la basse pression comporte une lèvre intérieure 15 dirigée vers l'axe qui vient racler la surface de la tige 4.

Un jonc 16 est disposé dans une nervure 17 ménagée dans la paroi 6 près de l'ouverture avant du logement 2.

Ce jonc 16 prend appui sur l'extrémité avant 14 de la couronne 1 et bloque ainsi cette dernière dans le logement 2.

Grâce aux lèvres 12 et 13 la couronne 1 assure l'étanchéité entre le corps de vérin rempli d'air comprimé (haute pression) et l'extérieur (basse pression).

Grâce aux surfaces interne 7 et externe 8 la tige 4 de vérin est guidée.

La couronne 1 assure également le raclage de la tige du vérin grâce à la lèvre 15.

La couronne 1 peut être facilement fabriquée par moulage d'une matière thermoplastique qui de préférence est un copolymère d'acétal. Elle a une bonne durée de vie même lorsqu'on utilise de l'air comprimé non lubrifié.

REVENDICATION

Dispositif de guidage d'étanchéité et de raclage de tige (4) de vérin (3) comportant un logement (2) situé autour de la tige (4) du vérin (3) à l'intérieur duquel est disposé une couronne (1) en matière thermoplastique moulée dont au moins une partie de la surface interne (7) s'applique sur la tige (4) tandis qu'au moins une partie de la surface externe (8) s'applique sur la paroi (6) du logement (2) opposée à la tige (4), ladite couronne (1) comportant à une première extrémité (11) recevant la haute pression une lèvre intérieure (12) dirigée vers l'axe de la tige (4), et venant frotter sur cette tige (4) et à l'autre extrémité (14) recevant la basse pression une lèvre intérieure (15) dirigée vers l'axe de la tige (4) et venant racler la surface de ladite tige (4), ladite couronne (1) comportant des moyens d'étanchéité dans le logement (2) et étant bloquée dans ledit logement (2) par des moyens de blocage,

caractérisé en ce que la paroi (6) du logement (2) opposée à la tige (4) est un cylindre droit, en ce que les moyens d'étanchéité sont constitués par une lèvre extérieure (13) faisant partie de ladite couronne et s'écartant de l'axe de la tige et disposée à l'extrémité (11) recevant la haute pression, ladite lèvre (13) venant appliquer sur la paroi (6) du logement (2) opposée à la tige (4) et en ce que les moyens de blocage sont constitués par un jonc (16) prenant appui sur l'extrémité (14) de la couronne (1) soumise à la basse pression et dans une nervure (17) ménagée dans la paroi (6) du logement (2) opposée à la tige (4).